(19) Europäisches Patentamt
European Patent Office
Office européen des brevets

(11) **EP 4 105 673 B1**

(12) **FASCICULE DE BREVET EUROPEEN**

(45) Date de publication et mention
de la délivrance du brevet:
**17.09.2025 Bulletin 2025/38**

(21) Numéro de dépôt: **22178129.7**

(22) Date de dépôt: **09.06.2022**

(51) Classification Internationale des Brevets (IPC):
**G01S 1/04** *(2006.01)* **G01S 1/08** *(2006.01)*
**H04B 7/06** *(2006.01)* **H04B 1/7163** *(2011.01)*
**H04B 1/7183** *(2011.01)*

(52) Classification Coopérative des Brevets (CPC):
**H04B 7/0667; G01S 1/042;** G01S 1/08;
H04B 1/71637; H04B 1/7183

(54) **MÉTHODE D'ESTIMATION DE CARACTÉRISTIQUES D'UN SIGNAL ULTRA LARGE BANDE IMPULSIONNEL ÉMIS PAR PLUSIEURS ANTENNES**

METHODE ZUR EINSCHÄTZUNG DER EIGENSCHAFTEN EINES GEPULSTEN ULTRABREITBANDSIGNALS, DAS VON MEHREREN ANTENNEN AUSGESENDET WIRD

METHOD FOR ESTIMATING CHARACTERISTICS OF A PULSE-BASED ULTRA-WIDEBAND SIGNAL EMITTED BY A PLURALITY OF ANTENNAS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.06.2021 FR 2106468**

(43) Date de publication de la demande:
**21.12.2022 Bulletin 2022/51**

(73) Titulaire: **Commissariat à l'Energie Atomique et
aux Energies
Alternatives
75015 Paris (FR)**

(72) Inventeur: **DEHMAS, François
38054 Grenoble Cedex 09 (FR)**

(74) Mandataire: **Atout PI Laplace
Immeuble Up On
25 Boulevard Romain Rolland
CS 40072
75685 Paris Cedex 14 (FR)**

(56) Documents cités:
**US-A1- 2018 254 870 US-A1- 2020 252 101**

**Description**

L'invention concerne le domaine des systèmes de communication ultra large bande impulsionnels, c'est-à-dire pour lesquels les signaux sont modulés sous forme d'impulsions de durée très courte.

Plus précisément, l'invention concerne les systèmes dans lesquels plusieurs antennes sont utilisées en émission et porte sur une méthode d'estimation de décalages de phase entre les signaux reçus provenant de différentes antennes. Les décalages de phase ainsi estimés permettent de calculer des différences de phases puis d'estimer la direction angulaire d'émission du signal. Une application de l'invention concerne la localisation d'un émetteur ou la mesure de distance entre un émetteur et un récepteur.

L'estimation des décalages de phase permet aussi d'améliorer la démodulation des signaux.

La méthode porte également sur l'estimation d'un décalage de fréquence porteuse entre un récepteur et un émetteur ainsi que sur l'estimation d'une réponse impulsionnelle du canal de propagation.

Dans le domaine des systèmes de communication radio, les signaux reçus en bande de base par les récepteurs sont perturbés par de multiples défauts liés à des désynchronisations entre l'émetteur et le récepteur ou aux conditions de propagation des signaux. En effet, en pratique, les conditions de réception ne sont pas idéales.

Plus précisément, un décalage de fréquence porteuse apparait entre le signal reçu et le signal émis lorsque les oscillateurs locaux respectifs de l'émetteur et du récepteur ne sont pas synchronisés.

Dans le cas où l'émetteur comporte plusieurs antennes en émission, un décalage de phase propre à chaque antenne existe aussi entre le signal reçu et le signal émis, du fait de temps de propagation différents entre chaque antenne émettrice et l'antenne réceptrice.

Ces décalages de phase doivent être compensés pour assurer de bonnes performances de démodulation mais ils peuvent également être utiles pour estimer une direction angulaire du signal émis.

Par ailleurs, les systèmes de communication ultra large bande sont soumis à des perturbations liées aux réflexions multiples du signal sur les obstacles de l'environnement. Ces perturbations affectent les signaux reçus sous la forme d'interférence entre symboles du fait des trajets multiples du signal reçus simultanément.

Un problème technique à résoudre dans ce contexte consiste à estimer les décalages de phase entre les signaux reçus provenant de différentes antennes d'un émetteur multi antennes mais aussi à estimer le décalage de fréquence porteuse et la réponse impulsionnelle du canal de propagation.

La demande de brevet US 20200252101 décrit une méthode de détermination d'une direction angulaire pour des systèmes de communication ultra large bande basée sur une estimation directe des angles de départ des signaux provenant de chaque antenne. Ce document ne décrit pas de méthode permettant d'estimer, en réception, les différences de phases entre signaux provenant de différentes antennes d'émission.

Les documents de brevet US2017/0227623, US9048979 et US9048980 décrivent des méthodes de synchronisation en phase et fréquence pour des systèmes ultra large bande. Ces documents proposent des méthodes d'estimation de la phase et de la fréquence basées sur une corrélation entre le carré de la voie de réception I et de la voie de réception Q. Ces méthodes présentent l'inconvénient d'être peu efficaces à faible rapport signal à bruit du fait de la mise au carré des signaux en réception.

On connait par ailleurs le document US 2018/254870 A1, relatif à une méthode d'estimation de différence de phase au récepteur, basée sur une transmission de STS par un transmetteur à 2 antennes.

L'invention propose une nouvelle méthode d'estimation des décalages de phase et fréquence pour des systèmes de communication ultra large bande dans lesquels les émetteurs comportent plusieurs antennes. L'invention est définie par l'objet de la revendication 1, concernant la méthode d'estimation, et par l'objet de la revendication 8, relatif au récepteur correspondant. Les modes de réalisations privilégiés sont définis par l'objet des revendications dépendantes.

Un avantage de l'invention est qu'elle présente de bonnes performances d'estimation même à faible rapport signal à bruit.

L'invention a pour objet une méthode d'estimation d'au moins une caractéristique d'un signal reçu par un récepteur, le signal ayant été émis successivement par plusieurs antennes dans des segments temporels successifs, chaque segment étant dédié à une antenne distincte, le signal étant modulé sous forme d'impulsions selon une modulation ultra large bande, la méthode comprenant les étapes de :

- Recevoir et numériser ledit signal,

- Calculer le produit de chaque symbole du signal reçu avec le complexe conjugué du symbole correspondant émis,

- Pour chaque segment et pour chaque symbole du signal reçu pour ce segment, estimer une erreur de phase au moyen d'une boucle à verrouillage de phase appliquée audit produit,

- Pour chaque segment, déterminer une phase de référence au moyen d'une régression linéaire appliquée aux erreurs de phase estimées sur l'ensemble des segments,

- Déterminer, pour au moins un couple d'antennes, une différence de phase entre les signaux émis par les antennes du couple, à partir de la différence entre les phases de référence calculées pour les segments associés auxdites antennes.

Selon un aspect particulier de l'invention, la détermination de la différence de phase, la détermination d'un décalage de fréquence porteuse entre le signal émis par l'ensemble des antennes et le signal reçu au moyen de la dite régression linéaire appliquée aux erreurs de phase estimées sur l'ensemble des segments.

Selon un aspect particulier de l'invention, les segments temporels successifs sont séparés par des intervalles de garde et la méthode comprend en outre, la suppression, dans le signal reçu et numérisé, de ces intervalles de garde.

Selon un mode de réalisation particulier, la méthode comprend en outre une étape de détermination d'une direction angulaire d'émission du signal à partir desdites différences de phase.

Selon un mode de réalisation particulier, la méthode comprend en outre les étapes de :

- Corriger chaque symbole du signal reçu de l'erreur de phase calculée au moyen de la boucle à verrouillage de phase,

- Estimer une réponse impulsionnelle du canal de propagation à partir d'un calcul d'intercorrélation entre la séquence des symboles reçus corrigés et une séquence des symboles émis dans les segments.

Selon un mode de réalisation particulier, la méthode comprend au préalable une phase de synchronisation initiale propre à chaque segment comprenant les étapes de :

- Déterminer, sur une séquence de préambule antérieure au premier segment, une première estimation d'un décalage de fréquence porteuse entre le signal reçu et le signal numérisé,

- Corriger le signal reçu numérisé de cette première estimation,

- Estimer, sur chaque début de segment, une réponse impulsionnelle du canal de propagation à partir d'un calcul d'intercorrélation entre une séquence de symboles reçus corrigés et une séquence des symboles émis correspondants,

- Déterminer, à partir de la réponse impulsionnelle estimée pour chaque début de segment, un symbole correspondant au début du segment.

Selon un aspect particulier de l'invention, le signal est conforme au standard IEEE802.15.4z.

Selon un aspect particulier de l'invention, les séquences de symboles émis dans les segments temporels sont sécurisées au moyen d'un algorithme de chiffrement.

L'invention a aussi pour objet un récepteur de signal modulé sous forme d'impulsions selon une modulation ultra large bande comprenant une antenne et un calculateur configuré pour exécuter les étapes de la méthode d'estimation d'au moins une caractéristique du signal reçu selon l'invention.

L'invention a encore pour objet un système de communication comprenant un émetteur de signal modulé sous forme d'impulsions selon une modulation ultra large bande comprenant plusieurs antennes, le signal étant émis successivement par plusieurs antennes dans des segments temporels successifs, chaque segment étant dédié à une antenne distincte, le système comprenant en outre un récepteur selon l'invention.

D'autres caractéristiques et avantages de la présente invention apparaîtront mieux à la lecture de la description qui suit en relation aux dessins annexés suivants.

[Fig. 1] représente un diagramme théorique de l'évolution de la phase d'un signal ultra large bande émis par deux antennes et reçu par une antenne,

[Fig. 2] représente plusieurs exemples de configuration de format de trames du standard IEEE802.15.4z,

[Fig. 3] représente un exemple de signal impulsionnel ultra large bande,

[Fig. 4] représente un schéma d'une boucle à verrouillage de phase,

[Fig. 4b] représente un diagramme de variation d'une erreur de phase,

[Fig. 5] représente un synoptique d'une méthode d'estimation de décalages de phase, fréquence et d'estimation de réponse impulsionnelle selon différents modes de réalisation de l'invention,

[Fig. 6] représente un schéma illustrant une étape de détermination d'un angle de transmission,

[Fig. 7] représente un diagramme de performances des résultats de la méthode selon l'invention en fonction de différents rapport signaux à bruit et de configuration d'émission du signal,

[Fig. 8] représente un synoptique d'une variante de la méthode selon l'invention,

[Fig. 9] représente un diagramme comparatif de performances de la méthode selon l'invention,

[Fig. 10] représente un schéma simplifié d'un système de communication selon l'invention.

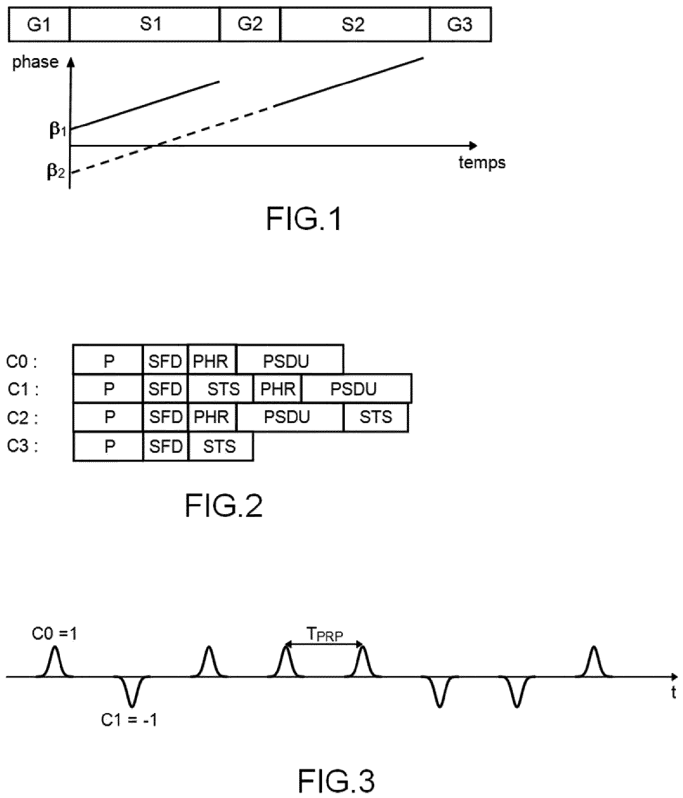

L'invention est à présent décrite dans le cadre d'une application au standard IEEE802.15.4z qui est un amendement du standard IEEE802.15.4. Cette application est donnée à titre d'exemple illustratif et non limitatif. L'invention s'applique pour tout standard ou pour toute forme d'onde compatible d'une modulation ultra large bande impulsionnelle (IR-UWB) et qui respecte les conditions illustrées à la figure 1.

L'invention s'applique pour des systèmes de communications IR-UWB comprenant un émetteur multi-antennes (comprenant au moins deux antennes) et un récepteur mono-antenne.

Selon l'invention, plusieurs caractéristiques du signal reçu par le récepteur sont estimées. Pour cela, on considère que le signal est émis successivement par chaque antenne de l'émetteur sur des intervalles temporels appelés segments, chaque segment étant séparé par un intervalle de garde.

Sur la figure 1, on a représenté un exemple de format d'émission pour un émetteur ayant deux antennes. Les deux antennes émettent successivement et respectivement dans les segments S1 et S2, séparés par les intervalles de garde G1,G2,G3.

Sur la figure 1 est aussi représentée l'allure théorique de l'évolution temporelle de la phase du signal reçu par le récepteur. Sur chacun des segments, la phase du signal évolue linéairement avec une pente commune à tous les segments qui correspond à un écart de fréquence porteuse. On considère ici que toutes les antennes émettrices sont pilotées par un même oscillateur. L'écart de fréquence porteuse ou « carrier frequency offset » CFO en anglais, sur le signal reçu est du au fait que les oscillateurs respectifs de l'émetteur et du récepteur ne sont pas synchronisés.

Sur chaque segment, la phase présente une ordonnée à l'origine $\beta_1$, $\beta_2$ qui représente une référence commune à un instant de référence. La différence $\beta_2$-$\beta_1$ contient l'information d'écarts de phases entre les signaux provenant des deux antennes.

L'invention vise notamment à estimer les écarts de phase et l'écart de fréquence précités. L'estimation des écarts de phase permet de calculer des différences de phase pour en déduire, par exemple un angle de départ du signal, c'est-à-dire une direction angulaire du signal, ce qui permet de localiser l'émetteur ou le récepteur.

L'invention permet également de conserver une cohérence de phase pour effectuer une démodulation cohérente des éventuelles données transmises après les segments S1,S2 qui sont dédiés aux estimations de fréquence et phase.

La figure 2 schématise plusieurs configurations de trames selon le standard IEEE 802.15.4z. Ce standard propose plusieurs formats de trames comprenant un champ dédié à la mesure de distance et/ou d'angle d'arrivée, ce champ étant appelé STS (Scrambled Timestamp Sequence).

La configuration C0 présente une trame constituée des éléments suivants :

- un préambule P constitué d'une répétition d'une séquence donnée et sert à la synchronisation temporelle et fréquentielle initiale et à la détection de la trame,

- un champ SFD (Start of Frame Delimiter) qui est une répétition de la même séquence que le préambule mais avec une pondération par 1,0 ou -1. Cette séquence permet de confirmer la détection de la trame et de détecter la fin du préambule,

- un champ PHR (PHY header) qui contient des informations d'entête,

- un champ PSDU (PHY service data unit) qui contient les données du point de vue de la couche physique.

La configuration C1 comporte en outre un champ STS entre le champ SFD et l'entête PHR.

La configuration C2 comporte un champ STS après les données PSDU.

La configuration C3 ne comporte pas de données PSDU (ni d'entête PHR).

Les configurations C1,C2,C3 peuvent être utilisées pour mettre en œuvre l'invention.

Le champ STS est formé de segments S1,S2 séparés par des intervalles de garde sans émission G1,G2,G3 comme illustré à la figure 1.

La figure 1 représente deux segments, mais l'invention est applicable quel que soit le nombre de segments au moins égal à 2.

Le signal émis dans un intervalle temporel correspondant à un segment S1,S2 est composé d'impulsions séparées d'une durée fixe $T_{PRP}$. Chaque impulsion étant émise avec une amplitude complexe connue $c_n$. Sans sortir du cadre de l'invention, la durée entre deux impulsions successives peut être variable dans la mesure où cette durée est connue du récepteur.

Sur la figure 3, on a représenté un exemple de séquence de symboles transmise pour un segment. Sur cet exemple, les symboles sont réels mais ils peuvent être complexes, auquel cas, il existe deux voies I et Q, chaque voie étant modulée de la façon représentée à la figure 3.

Les symboles transmis pour un segment S1,S2 sont ainsi modulés avec une modulation IR-UWB. La durée typique d'une impulsion est de l'ordre de la nanoseconde, par exemple égale à 2ns.

On explicite à présent la forme du signal reçu par un récepteur, le signal ayant été émis selon les principes exposés précédemment par un émetteur ayant $N_{seg}$ antennes, correspondant à $N_{seg}$ segments.

On définit le signal reçu en bande de base z(t) pour un segment :

$$z(t) = \exp(2i\pi\Delta f t + i\phi_0) \sum_{k=0}^{N-1} c_k \sum_{v=0}^{N_{path}-1} h_v p(t - kT_{PRP} - \tau_v) + b(t)$$

Où :

- N est le nombre de symboles complexes par segment,
- $\phi_0$ est un écart de phase entre la phase de l'oscillateur local du récepteur et la phase du signal émis par chaque antenne. Cet écart n'intègre pas l'écart de phase du au temps de propagation du signal,
- $\Delta f$ est un écart de fréquence entre le récepteur et l'émetteur (commun à toutes les antennes),
- p(t) est la forme de l'impulsion de base,
- b(t) est un bruit dont les parties réelles et imaginaires sont supposées blanches gaussiennes centrées et de même variance,
- $N_{path}$ est le nombre de trajets du canal de propagation,
- $h_v$ et $\tau_v$ sont respectivement l'amplitude complexe du trajet v du signal et le retard du trajet v,

la réponse impulsionnelle du canal, *h(t)*, est donc définie par :

$$h(t) = \sum_{v=0}^{N_{path}-1} h_v \delta(t - \tau_v)$$

On pose :

$$p_h(t) = \sum_{v=0}^{N_{path}-1} h_v p(t - \tau_v)$$

Et on obtient :

$$z(t) = \exp(2i\pi\Delta f t + i\phi_0) \sum_{k=0}^{N-1} c_k p_h(t - kT_{PRP}) + b(t)$$

On étend la notation à l'ensemble du champ STS en considérant que les symboles $c_k$ sont nuls dans les intervalles de garde G1,G2,G3 entre segments S1,S2.

Si on considère qu'un intervalle de garde G1,G2,G3 a une durée égale à $N_g T_{PRP}$, les symboles $c_N \ldots c_{N+N_g-1}$ « transmis » pendant un intervalle de garde qui suit le premier segment sont nuls.

De même, si le champ STS comporte trois segments, les symboles $c_{2N+N_g} \ldots c_{2N+2N_g-1}$ de l'intervalle de garde entre le deuxième et le troisième segment sont nuls et ainsi de suite.

Le canal de propagation varie entre les segments puisque chaque segment correspond à une antenne émettrice différente. On note $h_s$ le canal sur le segment d'indice s. On peut alors écrire (avec $N_{seg}$ le nombre de segments,

$$T_s = N \times T_{PRP} \text{ et } T_g = N_g \times T_{PRP}) :$$

$$z(t) = \exp(2i\pi\Delta f t + i\phi_0) \sum_{s=0}^{N_{seg}-1} \sum_{k=0}^{N-1} c_{k+s(N+N_g)} p_{h_s}\big(t - kT_{PRP} - s(T_s + T_g)\big) + b(t)$$

En réception, ce signal est échantillonné avec une période d'échantillonnage $T_{ech}$ (respectant une fréquence d'échantillonnage supérieure à deux fois la largeur de bande) pour obtenir le signal discret $z_n$ :

$$z_n = z(nT_{ech})$$

Une étape de synchronisation temporelle réalisée sur le préambule P permet de déterminer l'indice $n_0$ correspondant à un trajet particulier (par exemple le trajet le plus fort ou le premier) pour la première impulsion du champ STS. Si nécessaire, on détermine $n_s$ pour chaque segment s.

On définit alors le signal $u_n$ (avec $M = N + N_g$ est le nombre de symboles dans un segment suivi d'un intervalle de garde) :

$$u_n = \exp(2i\pi\Delta f(n_0 T_{ech} + nT_{PRP}) + i\phi_0) \sum_{k=0}^{N-1} c_k p_{h_0}(n_0 T_{ech} + (n-k)T_{PRP}) +$$

$$b_n \text{ pour le segment 0}$$

$$u_n = \exp(2i\pi\Delta f(n_1 T_{ech} + nT_{PRP}) + i\phi_0) \sum_{k=0}^{N-1} c_{k+M} p_{h_1}(n_1 T_{ech} + (n-k-$$

$$M)T_{PRP}) + b_n \text{ pour le segment 1}$$

$$u_n = \exp\left(2i\pi\Delta f\left(n_{N_{seg}-1} T_{ech} + nT_{PRP}\right) +\right.$$

$$\left.i\phi_0\right) \sum_{k=0}^{N-1} c_{k+(N_{seg}-1)M} p_{h_{N_s-1}}\left(n_{N_{seg}-1} T_{ech} + \left(n-k-(N_{seg}-1)M\right)T_{PRP}\right) + b_n \text{ pour}$$

le dernier segment

0 entre les segments

Si le support temporel de la fonction $p_{h_s}$ est inférieur à la durée entre deux impulsions, alors la somme sur chacune des lignes disparait pour ne laisser que le nième terme (pas d'interférence entre impulsions).

Chaque symbole du signal reçu est ensuite multiplié par le complexe conjugué des symboles $c_k$ émis lors d'un champ STS :

$$w_n = u_n \times c_n^*$$

$w_n$ est nul dans les intervalles de garde (i.e. pour

$$n \in [\![ N ; M-1 ]\!] \cup [\![ N+M ; 2M-1 ]\!] \cup ... \cup [\![ N+(N_{seg}-2)M ; (N_s-1)M-1 ]\!] )$$

Si il n'y a pas d'interférence entre impulsions, seul le module des symboles $c_n$ apparait alors. Dans le cas général, les autres termes correspondent à de l'interférence entre impulsions qui peut être assimilée à du bruit.

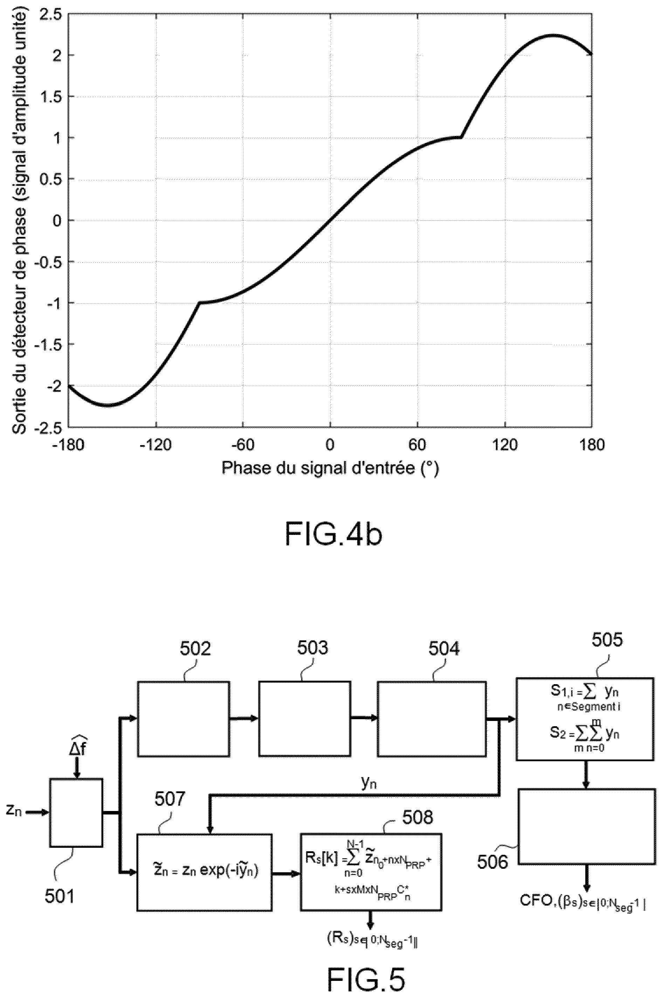

Les étapes de la méthode selon l'invention sont illustrées sur le schéma de la figure 5.

A l'étape 501, on reçoit le signal $z_n$ qui a été préalablement numérisé et on corrige le signal d'une estimation d'un écart de fréquence d'échantillonnage (ou « Sampling Frequency Offset », SFO en anglais). Cet écart SFO est obtenu à partir d'une étape préalable de synchronisation fréquentielle qui est réalisée pour estimer le décalage de fréquence porteuse $\widehat{\Delta f}$ entre l'émetteur et le récepteur. Ce décalage $\widehat{\Delta f}$ est aussi appelé « Carrier Frequency Offset » ou CFO en anglais. L'écart de fréquence d'échantillonnage SFO est l'équivalent, dans le domaine temporel, de l'écart de fréquence porteuse CFO qui a, en relatif, la même valeur car il est généré par les mêmes oscillateurs de fréquence en émission. Cette étape de synchronisation fréquentielle préalable est réalisée sur le préambule P de la trame.

A l'étape 502, on sélectionne l'un des trajets $n_0$ du signal à partir d'une synchronisation temporelle préalable réalisée sur le préambule P de la trame pour déterminer le début du champ STS.. Par exemple, le trajet sélectionné est le trajet d'amplitude le plus fort. En d'autres termes, l'étape 502 consiste à sélectionner les échantillons du signal correspondant au trajet sélectionné à partir du résultat de la synchronisation temporelle.

Selon un premier mode de réalisation de l'invention, cette étape 502 est commune à tous les segments. Ce premier mode est applicable lorsque les antennes de l'émetteur sont suffisamment proches pour que les canaux de propagation entre chaque antenne émettrice et le récepteur puissent être supposés identiques.

A l'étape 503, on multiplie chaque symbole du champ STS (autrement dit chaque symbole de chaque segment) par le complexe conjugué du symbole émis correspondant : $w_n = u_n \times c_n^*$.

A l'étape 504, on applique aux symboles $w_n$, une boucle à verrouillage de phase numérique afin d'extraire la phase du signal.

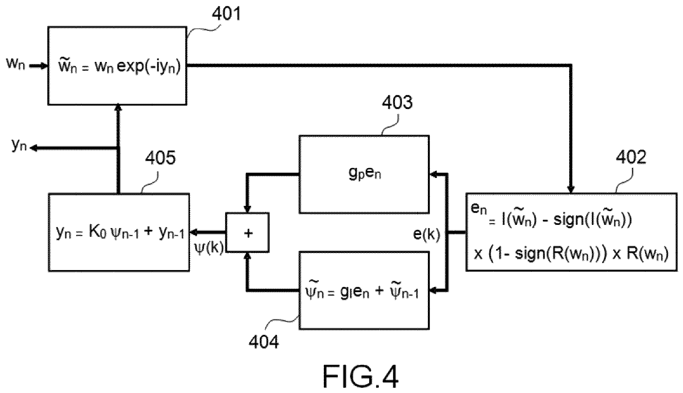

Un exemple de boucle à verrouillage de phase est illustré à la figure 4 et est constitué de plusieurs étapes.

A l'étape 401, le symbole $w_n$ est corrigé de la dernière estimation de phase $y_n$ fournie en sortie de la boucle à l'itération précédente.

A l'étape 402, on calcule la phase $e_n$ du symbole corrigé ou une valeur qui varie dans le même sens de variation que cette phase sur au moins un intervalle de phases prédéterminé, par exemple au moyen d'un calcul d'arctangente ou du calcul simplifié suivant :

$$e_n = I(\widetilde{w_n}) - sign(I(\widetilde{w_n})) * \left(1 - sign(R(\widetilde{w_n})) * R(\widetilde{w_n})\right)$$

I et R désignent respectivement la partie imaginaire et la partie réelle du symbole.

La figure 4b illustre un exemple de variation de la phase $e_n$ tel que calculé via la formule précitée.

A l'étape 403, on applique un filtre proportionnel à l'erreur $e_n$, c'est-à-dire un gain $g_p$.

A l'étape 404, on applique un filtre intégrateur à l'erreur $e_n$, par exemple qui réalise le calcul $\widetilde{\psi_n} = g_1 e_n + \widetilde{\psi_{n-1}}$.

Les sorties des deux filtres 403,404 sont sommées de sorte à réaliser un système proportionnel intégral.

A l'étape 405, on applique enfin un filtre de boucle pour fournir l'estimée finale de la phase $y_n = K_0 \psi_{n-1} + y_{n-1}$.

Sans sortir du cadre de l'invention, d'autres implémentations sont envisageables pour réaliser une boucle à verrouillage de phase, notamment d'autres types de filtres peuvent être mis en œuvre.

On reprend ensuite le déroulé des étapes de la méthode décrite à la figure 5.

A l'étape 505, les phases $y_n$ calculées pour tous les symboles de tous les segments sont fournies en entrée d'une étape 505 de régression linéaire qui vise à déterminer la pente et les ordonnées à l'origine des droites décrites à la figure 1.

Autrement dit, on recherche les paramètres $\alpha$ et $\beta = [\beta_0 \dots \beta_{N_s-1}]^T$ qui minimisent la fonction :

$$f(\alpha, \beta) = \sum_{s=0}^{N_{seg}-1} \sum_{n=sM}^{sM+N-1} (y_n - \alpha n - \beta_s)^2$$

Cette optimisation peut être résolue par un algorithme de résolution numérique. On présente ici un exemple de résolution possible.

En dérivant par rapport à chacun des paramètres :

$$\left|\frac{\partial f}{\partial \alpha} = -2 \sum_{s=0}^{N_{seg}-1} \sum_{n=sM}^{sM+N-1} n(y_n - \alpha n - \beta_s)\right.$$

$$\left|\frac{\partial f}{\partial \beta_s} = -2 \sum_{n=sM}^{sM+N-1}(y_n - \alpha n - \beta_s) \text{ pour } s \in [\![0; N_{seg} - 1]\!]\right.$$

On définit $S_{1,s}$ comme la somme des symboles $y_n$ sur le segment s :

$$S_{1,s} = \sum_{n=sM}^{sM+N-1} y_n$$

On définit $S_2$ comme la double somme de tous les symboles $y_n$ en incluant les symboles des intervalles de garde :

$$S_2 = \sum_{m=0}^{(N_{seg}-1)M+N-1} \sum_{n=0}^{m} y_n$$

On peut aussi écrire :

$$S_2 = \sum_{n=0}^{(N_{seg}-1)M+N-1} \left( \left(N_{seg} - 1\right)M + N - n \right) y_n =$$

$$\left( \left(N_{seg} - 1\right)M + N \right) \sum_{s=0}^{N_{seg}-1} S_{1,s} - \sum_{n=0}^{(N_{seg}-1)M+N-1} n y_n$$

La résolution du système suivant

$$\frac{\partial f}{\partial \alpha} = 0$$

$$\frac{\partial f}{\partial \beta_s} = 0 \text{ pour } s \in [\![0; N_{seg} - 1]\!]$$

nous donne alors les résultats suivants :

$$\alpha = \frac{6}{N_{seg}} \frac{(N+1)S_{1,N_S-1} + (2M+N+1)S_{1,N_S-2} + \cdots + \left(2(N_{seg}-1)M+N+1\right)S_{1,0} - 2S_2}{N(N+1)(N-1)}$$

$$\beta_0 = \frac{S_{1,0}}{N} - \frac{\alpha}{2}(N-1)$$

$$\beta_1 = \frac{S_{1,1}}{N} - \frac{\alpha}{2}(2M + N - 1)$$

$$\beta_s = \frac{S_{1,s}}{N} - \frac{\alpha}{2}(2sM + N - 1)$$

$$\beta_{N_{seg}-1} = \frac{S_{1,N_S-1}}{N} - \frac{\alpha}{2}\big(2(N_{seg}-1)M + N + 1\big)$$

La complexité calculatoire pour obtenir ces valeurs est faible. Par exemple, dans un cas avec deux segments on obtient :

$$\alpha = 3\,\frac{(N+1)S_{1,1}+(2M+N+1)S_{1,0}-2S_2}{N(N+1)(N-1)}$$

$$|\beta_1 = \frac{S_{1,0}}{N} - \frac{\alpha}{2}(N-1)$$

$$\beta_2 = \frac{S_{1,1}}{N} - \frac{\alpha}{2}(2M+N-1)$$

L'unité des paramètres $\beta_s$ est la même que l'unité des symboles $y_n$. Ainsi, les valeurs des paramètres $\beta_s$ donnent les estimations des écarts de phase respectifs entre les signaux émis par chaque antenne et le signal reçu.

La pente $\alpha$ est une estimation du terme $2\pi\Delta fT_{PRP}$ et permet donc d'obtenir une estimation du terme $\Delta f$ qui est l'écart de fréquence porteuse entre le signal reçu et le signal émis.

Les estimées d'écarts de phase et de fréquence sont ainsi calculées à l'étape 506. En particulier, le calcul des différences $\beta_j$ - $\beta_i$ donne les écarts de phase, en réception, entre signaux émis par deux antennes différentes.

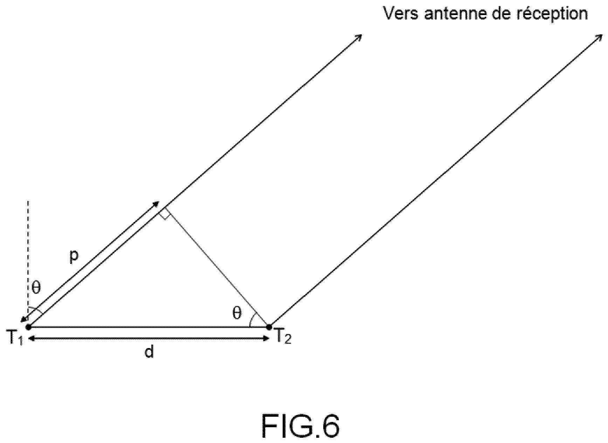

A partir des différences de phase $\beta_j$ - $\beta_i$, une étape supplémentaire (non représentée à la figure 5) permet de déterminer la direction de transmission du signal selon des principes géométriques illustrés à la figure 6.

Sur la figure 6, on a représenté schématiquement deux antennes $T_1$, $T_2$ séparées d'une distance d et transmettant un signal selon une direction de transmission $\theta$.

Par géométrie, avec les notations de la figure 6, on a :

$$p = d\sin(\theta)$$

En notant $\delta$ la différence des écarts de phase estimés à l'étape 506 (i.e. $\beta_2$ - $\beta_1$ converti en radians) et $\lambda$ la longueur d'onde, sachant que la différence de phase est causée par la différence de longueur de trajet de l'antenne $T_1$ vers le récepteur et de l'antenne $T_2$ vers le récepteur, on a :

$$\delta = \frac{2\pi}{\lambda}p$$

L'égalité est modulo $2\pi$ et il n'y a pas d'ambiguïté si $p/\lambda < 0.5$ donc si $d < \lambda/2$ (car $p \leq d$ dans toutes les situations).

On en déduit la relation entre la différence de phase d'arrivée $\delta$ et l'angle de départ $\theta$ :

$$\theta = \arcsin\left(\frac{\delta\lambda}{2\pi d}\right)$$

Si $d \geq \lambda/2$, d'autres solutions apparaissent en ajoutant des multiples de $2\pi$ à $\delta$.

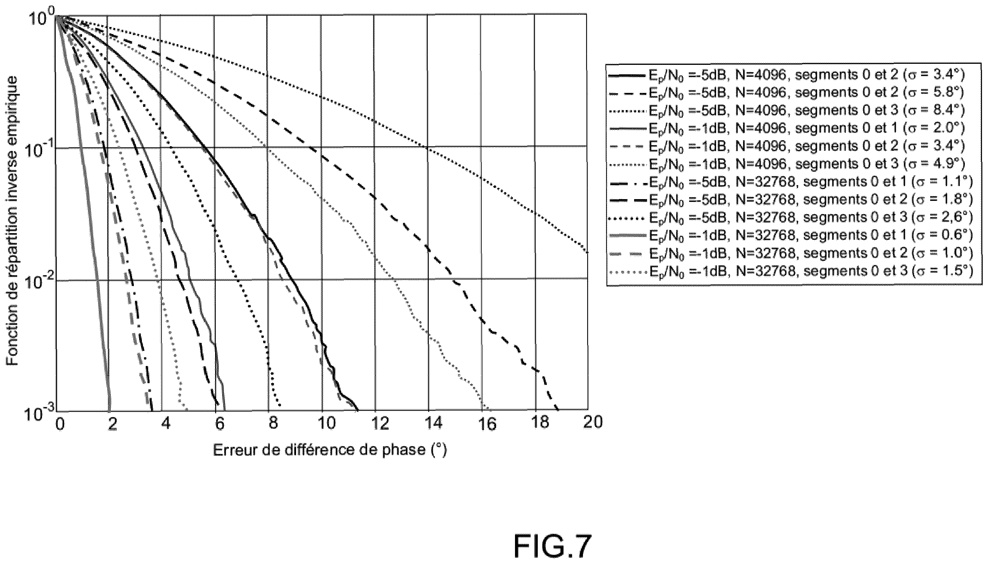

La figure 7 représente un diagramme de performances de la méthode selon l'invention obtenues par simulation.

Une simulation est réalisée en choisissant les paramètres suivants :

- Nombre d'impulsions par segment : $N$ = 4096 ou $N$ = 32768

- Nombre de segments : $N_{seg}$ = 4

- Le rapport signal à bruit est donnée par l'énergie par impulsion divisée par la densité spectrale de puissance du bruit : $E_p/N_0$ = -5 dB ou $E_p/N_0$ = -1 dB

- Écart de fréquence porteuse (CFO) = 400kHz

On simule une trame entière en configuration 1. La synchronisation initiale est réalisée sur le préambule du paquet en réalisant une corrélation entre le signal reçu et la séquence de préambule connu. La séquence de préambule (définie par le standard IEEE802.15.4z) a une autocorrélation nulle lorsque les séquences ne sont pas alignées, donc on peut ainsi obtenir à la fois une estimation de la réponse du canal à une impulsion et une synchronisation temporelle. Ainsi on peut déterminer l'indice $n_0$ mentionné plus haut.

On suppose les antennes séparées de moins d'une demi longueur d'onde, donc les écarts de temps d'arrivée entre antennes sont de moins de 143 ps (pour une fréquence centrale à 3.5 GHz) donc on peut considérer que l'instant de synchronisation $n_0$ est constant (La période d'échantillonnage $T_{ech}$ étant de l'ordre de 500 ps).

L'étape de synchronisation sur le préambule permet aussi d'estimer l'écart de fréquence porteuse CFO (par exemple en regardant la variation de phase entre deux pics de corrélations). Le rythme symbole est aussi sujet à un écart entre l'émetteur et le récepteur (SFO) mais comme les différentes fréquences proviennent d'un même oscillateur (côté récepteur et côté émetteur) les écarts relatifs CFO et SFO sont identiques dans cet exemple.

Les performances obtenues en simulation sont données sur la figure 7. Le rapport signal à bruit de -5dB correspond à une très bonne sensibilité pour un récepteur compatible du standard IEEE802.15.4z.

On représente en abscisse l'erreur d'estimation (en valeur absolue) sur l'écart de phase entre deux antennes correspondants à deux segments identifiés dans la légende et en ordonnée le ratio d'estimées qui ont une erreur supérieure à la valeur en abscisse (fonction de répartition inverse empirique). Dans la légende est aussi donné l'écart-type de l'erreur σ.

Dans une variante de réalisation de l'invention, les étapes supplémentaires 507 et 508 de la figure 5 sont appliquées pour reconstruire la réponse impulsionnelle du canal de transmission.

Pour cela, à l'étape 507, les informations de phase fournies par la boucle à verrouillage de phase 504 sont utilisées pour corriger le signal reçu :

$$\widetilde{z_n} = z_n . \exp(-i\widetilde{y_n})$$

$\widetilde{y_n}$ est obtenu par suréchantillonnage de l'estimée de phase $y_n$ fournie par la boucle à verrouillage de phase 504. En effet, les estimées de phase $y_n$ sont fournies au rythme d'un échantillon par période d'impulsions et il est nécessaire de revenir au rythme d'échantillonnage du signal $z_n$.

Ensuite, à l'étape 508, la réponse impulsionnelle du canal est estimée en réalisant une intercorrélation entre les symboles corrigés à l'étape 507 et les symboles correspondants qui ont été émis $c_n^*$ :

$$R_s[k] = \sum_{n=0}^{N-1} \tilde{z}_{n_0+n\times N_{PRP}+k+s\times M\times N_{PRP}} \times c_n^*$$

La réponse impulsionnelle $R_s$ est déterminée pour chaque segment avec k variant dans une plage de valeurs d'indices d'échantillons prédéterminée selon l'étendue souhaitée de la réponse impulsionnelle.

La méthode décrite à la figure 5 prend pour hypothèse que le canal de propagation ne varie pas ou varie peu en fonction des antennes d'émission, car ces antennes sont suffisamment proches.

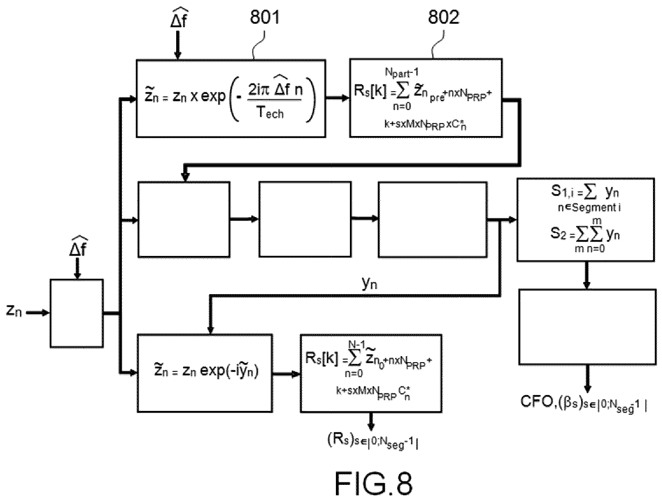

Dans le cas où cette hypothèse n'est plus vérifiée, par exemple parce que les antennes sont éloignées entre elles, une variante de réalisation de l'invention est proposée, tel qu'illustré à la figure 8. Dans cette variante, on considère que l'instant $n_0$ correspond au début du champ STS et déterminé par la synchronisation temporelle préalable n'est plus identique pour chaque segment.

Cette nouvelle variante de réalisation est représentée par le schéma de la figure 8 qui reprend toutes les étapes 501 à 508 de la figure 5 et ajoute deux étapes supplémentaires 801,802.

Dans le cas général où la réponse du canal varie de façon importante entre les antennes, on doit refaire une synchronisation pour déterminer les indices $n_i$ pour chaque segment.

En repartant du signal reçu $z_n$, on réalise, après l'étape 501 et via l'étape 801, une compensation de l'écart de fréquence porteuse CFO $\widehat{\Delta f}$ obtenu lors de la synchronisation sur le préambule P pour obtenir le signal $\check{z}_n$ corrigé :

$$\tilde{z}_n = z_n \times \exp\left(-i\frac{2\pi\widehat{\Delta f}n}{T_{ech}}\right)$$

A noter que si l'écart de fréquence entre l'émetteur et le récepteur est suffisamment faible, c'est-à-dire si la rotation de la phase est suffisamment faible devant $\pi$ sur la longueur de corrélation qui sera exécutée pour la synchronisation à l'étape 802, grâce à la précision des oscillateurs, cette compensation opérée à l'étape 801 est inutile.

Ensuite, à l'étape 802, on réalise un calcul d'intercorrélation pour déterminer la réponse impulsionnelle du canal de propagation sur le segment s.

Cette estimation 802 est réalisée, sur le début de chaque segment afin d'estimer le canal correspondant à chaque antenne d'émission. Encore une fois, on suppose ici que toutes les antennes présentent le même écart de fréquence porteuse CFO avec le récepteur (ce qui est le cas si les antennes sont sur un même appareil et sont alimentées tour à tour par une même source de signal).

De plus la synchronisation sur le préambule permet de savoir dans quelle fenêtre se trouve la première impulsion de chaque champ STS connaissant la distance entre l'antenne émettrice du préambule et l'antenne émettrice du segment considéré. Si on appelle *d* cette distance, l'impulsion (par rapport à celle qui aurait été émise si on n'avait pas changé d'antenne) sera décalée au maximum de $\pm$ *d*/*c* où *c* est la vitesse de propagation de l'onde.

Sur chaque début de segment, l'étape 802 vise à calculer alors l'intercorrélation entre les symboles corrigés à l'étape 801 et les symboles émis (même principe qu'à l'étape 508).

$$R_s[k] = \sum_{n=0}^{N_{part}-1} \tilde{z}_{n_{pre}+n\times N_{PRP}+k+s\times M\times N_{PRP}} \times c_n^*$$

La réponse $R_s[k]$ est calculée pour *k* tel que l'ensemble des *k* inclut au moins l'intervalle

$$[\![-d/(c\times T_{ech})]; \ [d/(c\times T_{ech})]\!]\!],$$

$n_{pre}$ est l'indice de position de la première impulsion du champ STS si elle avait été émise avec l'antenne qui a émis le préambule sur lequel cette valeur $n_{pre}$ est estimée, $N_{PRP}$ est le nombre d'échantillons par période,

$N_{part}$ est le nombre d'impulsions de chaque segment du champ STS sur lesquels on effectue la synchronisation (ce nombre étant choisi en fonction de la sensibilité visée).

On applique alors le critère choisi pour déterminer les instants de synchronisation $n_s$, pour chaque segment s, par exemple si on choisit le trajet le plus fort :

$$n_s = \underset{k}{\arg\max}(|R_s[k]|) + n_{pre}$$

Une fois les instants $n_s$ déterminés, on applique le même traitement que précédemment (où on avait $n_s = n_{pre}$), à savoir les étapes 501 à 508 décrites précédemment.

Dans le cas où l'invention est appliquée pour une configuration C1 du standard IEEE802.15.4z, c'est-à-dire un champ STS situé entre le champ de début de trame SFD et l'entête de couche physique PHR, il faut être capable en début de champ PHR de commencer la démodulation cohérente des données.

Cela suppose que les symboles soient alignés en phase. L'antenne qui émet l'entête PHR est celle qui émet le préambule et le champ SFD, donc il faut être capable de compenser les variations de phase (principalement dues à l'écart de fréquence porteuse CFO) qui se produisent pendant l'intervalle de temps correspondant au champ STS. Pour y arriver, l'invention exploite la poursuite de phase qui est effectuée sur le champ STS et retranche ensuite les sauts de phase causées par les changements d'antenne.

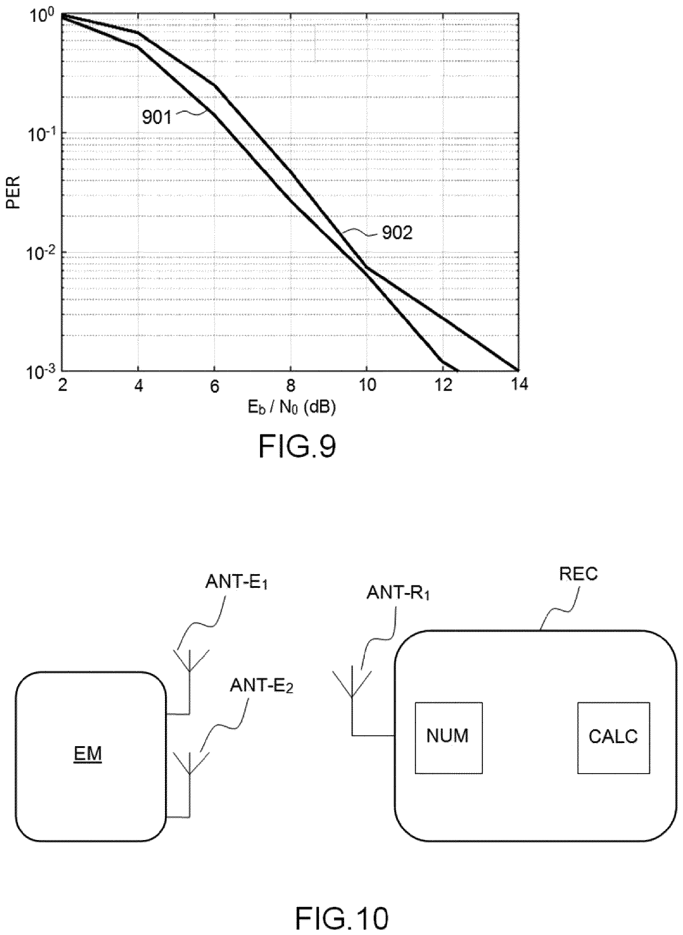

L'invention donne ainsi de bonnes performances comme illustré à la figure 9 qui représentent deux courbes de taux d'erreurs paquets en fonction d'un rapport signal à bruit respectivement sans la présence de champ STS et donc sans l'invention (courbe 901) et avec une configuration C2 pour laquelle l'invention est mise en œuvre sur des champs STS présents dans les trames émises.

Les conditions de réalisation de la simulation illustrée à la figure 9 sont les suivantes :
Lorsque le champ STS est présent (courbe 902)

- Nombre d'impulsions par segment : *N* = 32768

- Nombre de segments : $N_{seg}$ = 4

- Le canal de propagation est du type résidentiel

- On a 8 impulsions par bit, donc il faut retrancher 9 dB pour avoir un rapport signal impulsionnel à bruit $E_p / N_0$ à partir du rapport signal à bruit au niveau bit $E_b / N_0$

- L'écart de fréquence porteuse est égal à CFO = 400 kHz,

- $N_{part}$ = 1024 impulsions dédiées à la synchronisation initiale.

La figure 9, montre que pour un même taux d'erreurs paquet (PER) une perte limitée à 0,5dB est observée lorsque l'invention est appliquée (courbe 902) par rapport à un cas idéal (901).

L'invention peut être mise en œuvre au moyen d'un récepteur ultra large bande REC qui comporte une antenne ANT-R1, une voie de réception et numérisation NUM et un calculateur CALC configuré pour exécuter les étapes de la méthode selon l'invention. Un tel récepteur est schématisé à la figure 10.

Le calculateur CALC peut être réalisé sous forme logicielle et/ou matérielle notamment en utilisant un ou plusieurs processeur(s) et une ou plusieurs mémoire(s). Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Plus largement, l'invention peut être mise en œuvre au sein d'un système de communications ultra large bande, tel que décrit à la figure 10, comportant un récepteur REC du type décrit ci-dessus et au moins un émetteur ultra large bande EM ayant au moins deux antennes d'émission ANT-E1, ANT-E2.

L'invention est compatible du standard IEEE 802.15.4z ou de tout autre standard impliquant une modulation IR-UWB et pour lequel des segments dédiés à chaque antenne d'émission sont prévus dans le format des trames d'émission et comportent des symboles connus de l'émetteur et du récepteur, par exemple des symboles pilotes.

Avantageusement, les séquences de symboles utilisés dans les segments prévus, sont sécurisés au moyen d'un algorithme de chiffrement ou cryptographie, de sorte à sécuriser leur accès pour que seul l'émetteur et le récepteur ait accès à ces séquences.

Par exemple, un protocole de chiffrement symétrique de type AES peut être mis en œuvre entre l'émetteur et le récepteur du système pour échanger au préalable les valeurs des séquences utilisées dans les segments.

L'invention permet notamment une aide à la radiolocalisation et au contrôle d'accès sécurisé en permettant de localiser un émetteur à partir de sa direction angulaire de transmission.


**Revendications**

1. Méthode d'estimation d'au moins une caractéristique d'un signal reçu par un récepteur, le signal ayant été émis successivement par plusieurs antennes dans des segments temporels successifs (S1,S2), chaque segment (S1,S2) étant dédié à une antenne distincte, le signal étant modulé sous forme d'impulsions selon une modulation ultra large bande, la méthode comprenant les étapes de :

   - Recevoir le signal et le numériser,
   - Calculer (503) le produit de chaque symbole du signal reçu et numérisé avec le complexe conjugué du symbole correspondant émis, connu du récepteur
   - Pour chaque segment et pour chaque symbole du signal reçu pour ce segment, estimer une erreur de phase au moyen d'une boucle à verrouillage de phase (504) appliquée audit produit,
   - Pour chaque segment, déterminer (505) une phase de référence au moyen d'une régression linéaire appliquée aux erreurs de phase estimées sur l'ensemble des segments,
   - Déterminer (506), pour au moins un couple d'antennes, une différence de phase entre les signaux émis par les antennes du couple, à partir de la différence entre les phases de référence calculées pour les segments associés auxdites antennes.

2. Méthode d'estimation selon la revendication 1 comprenant en outre, conjointement avec la détermination (506) de la différence de phase, la détermination d'un décalage de fréquence porteuse entre le signal émis par l'ensemble des antennes et le signal reçu au moyen de la dite régression linéaire (505) appliquée aux erreurs de phase estimées sur l'ensemble des segments.

**3.** Méthode d'estimation selon l'une quelconque des revendications précédentes dans laquelle les segments temporels successifs (S1,S2) sont séparés par des intervalles de garde (G1,G2,G3) et la méthode comprend en outre, la suppression, dans le signal reçu et numérisé, de ces intervalles de garde.

**4.** Méthode d'estimation selon l'une quelconque des revendications précédentes comprenant en outre une étape de détermination d'une direction angulaire d'émission du signal à partir desdites différences de phase.

**5.** Méthode d'estimation selon l'une quelconque des revendications précédentes comprenant en outre les étapes de :

- Corriger (507) chaque symbole du signal reçu et numérisé de l'erreur de phase calculée au moyen de la boucle à verrouillage de phase,
- Estimer (508) une réponse impulsionnelle du canal de propagation à partir d'un calcul d'intercorrélation entre la séquence des symboles reçus corrigés et une séquence des symboles émis dans les segments.

**6.** Méthode d'estimation selon l'une quelconque des revendications précédentes comprenant au préalable une phase de synchronisation initiale propre à chaque segment comprenant les étapes de :

- Déterminer, sur une séquence de préambule antérieure au premier segment, une première estimation d'un décalage de fréquence porteuse entre le signal reçu et numérisé et le signal émis,
- Corriger (801) le signal reçu numérisé de cette première estimation,
- Estimer (802), sur chaque début de segment, une réponse impulsionnelle du canal de propagation à partir d'un calcul d'intercorrélation entre une séquence de symboles reçus corrigés et une séquence des symboles émis correspondants,
- Déterminer, à partir de la réponse impulsionnelle estimée pour chaque début de segment, un symbole correspondant au début du segment.

**7.** Méthode d'estimation selon l'une quelconque des revendications précédentes dans laquelle les séquences de symboles émis dans les segments temporels sont sécurisées au moyen d'un algorithme de chiffrement.

**8.** Récepteur de signal modulé sous forme d'impulsions selon une modulation ultra large bande comprenant une antenne et un calculateur configuré pour exécuter les étapes de la méthode d'estimation d'au moins une caractéristique du signal reçu selon l'une quelconque des revendications précédentes.

**9.** Système de communication comprenant un émetteur de signal modulé sous forme d'impulsions selon une modulation ultra large bande comprenant plusieurs antennes, le signal étant émis successivement par plusieurs antennes dans des segments temporels successifs, chaque segment étant dédié à une antenne distincte, le système comprenant en outre un récepteur selon la revendication 8.

**Patentansprüche**

**1.** Verfahren zum Schätzen mindestens eines Merkmals eines von einem Empfänger empfangenen Signals, wobei das Signal nacheinander von mehreren Antennen in aufeinanderfolgenden Zeitsegmenten (S1, S2) gesendet wurde, wobei jedes Segment (S1, S2) einer separaten Antenne gewidmet ist, wobei das Signal in Form von Impulsen gemäß einer Ultrabreitbandmodulation moduliert ist, wobei das Verfahren die Schritte umfasst:

- Empfangen und digitalisieren des Signals,
- Berechnen (503) des Produkts jedes Symbols des empfangenen und digitalisierten Signals mit dem komplexen Konjugierten des entsprechenden gesendeten Symbols, das dem Empfänger bekannt ist
- Schätzen, für jedes Segment und für jedes Symbol des für dieses Segment empfangenen Signals, eines Phasenfehlers mittels einer auf das Produkt angewendeten Phasenregelschleife (504),
- Bestimmen, für jedes Segment (505), einer Referenzphase mittels einer linearen Regression, die auf die auf der Gesamtheit der Segmente geschätzten Phasenfehler angewendet wird,
- Bestimmen (506), für mindestens ein Antennenpaar, einer Phasendifferenz zwischen den von den Antennen des Paares gesendeten Signalen, ausgehend von der Differenz zwischen den Referenzphasen, die für die den Antennen zugeordneten Segmente berechnet wurden.

**2.** Schätzverfahren nach Anspruch 1, umfassend weiter, zusammen mit dem Bestimmen (506) der Phasendifferenz, das Bestimmen einer Trägerfrequenzverschiebung zwischen dem von der Gesamtheit der Antennen gesendeten Signal und dem empfangenen Signal mittels der linearen Regression (505), die auf die auf der Gesamtheit der Segmente geschätzten Phasenfehler angewendet wird.

3. Schätzverfahren nach einem der vorstehenden Ansprüche, wobei die aufeinanderfolgenden Zeitsegmente (S1, S2) durch Schutzintervalle (G1, G2, G3) getrennt sind und das Verfahren weiter das Unterdrücken dieser Schutzintervalle in dem empfangenen und digitalisierten Signal umfasst.

4. Schätzverfahren nach einem der vorstehenden Ansprüche, umfassend weiter einen Schritt zum Bestimmen einer Winkelsenderichtung des Signals ausgehend von den Phasendifferenzen.

5. Schätzverfahren nach einem der vorstehenden Ansprüche, weiter umfassend die Schritte:

   - Korrigieren (507) jedes Symbols des empfangenen und digitalisierten Signals um den Phasenfehler, der mittels der Phasenregelschleife berechnet wurde,
   - Schätzen (508) einer Impulsantwort des Ausbreitungskanals aus einer Interkorrelationsberechnung zwischen der Sequenz der korrigierten empfangenen Symbole und einer Sequenz der in den Segmenten gesendeten Symbole.

6. Schätzverfahren nach einem der vorstehenden Ansprüche, umfassend vorab eine für jedes Segment eigene anfängliche Synchronisationsphase, umfassend die Schritte:

   - Bestimmen, auf einer dem ersten Segment vorausgehenden Präambelsequenz, einer ersten Schätzung einer Trägerfrequenzverschiebung zwischen dem empfangenen und digitalisierten Signal und dem gesendeten Signal,
   - Korrigieren (801) des digitalisierten Signals dieser ersten Schätzung,
   - Schätzen (802), zu Beginn jedes Segments, einer Impulsantwort des Ausbreitungskanals aus einer Interkorrelationsberechnung zwischen einer Sequenz korrigierter empfangener Symbole und einer Sequenz der entsprechenden gesendeten Symbole,
   - Bestimmen, ausgehend von der geschätzten Impulsantwort für jeden Segmentanfang, eines Symbols, das dem Segmentanfang entspricht.

7. Schätzverfahren nach einem der vorstehenden Ansprüche, wobei die in den Zeitsegmenten gesendeten Symbolsequenzen mittels eines Verschlüsselungsalgorithmus gesichert werden.

8. Empfänger eines in Form von Impulsen modulierten Signals gemäß einer Ultrabreitbandmodulation, umfassend eine Antenne und einen Rechner, der dazu konfiguriert ist, die Schritte des Schätzverfahrens mindestens eines Merkmals des empfangenen Signals gemäß einem der vorstehenden Ansprüche auszuführen.

9. Kommunikationssystem, umfassend einen Sender eines in Form von Impulsen modulierten Signals gemäß einer Ultrabreitbandmodulation, umfassend mehrere Antennen, wobei das Signal nacheinander von mehreren Antennen in aufeinanderfolgenden Zeitsegmenten gesendet wird, wobei jedes Segment einer separaten Antenne gewidmet ist, wobei das System weiter einen Empfänger nach Anspruch 8 umfasst.

**Claims**

1. A method for estimating at least one characteristic of a signal received by a receiver, the signal having been transmitted in succession by a plurality of antennas in successive time segments (S1, S2), each segment (S1, S2) being dedicated to one separate antenna, the signal being modulated into the form of pulses according to ultrawideband modulation, the method comprising steps of:

   - receiving and digitizing the signal,
   - computing (503) the product of multiplication of each symbol of the received and digitized signal by the complex conjugate of the corresponding transmitted symbol, which is known to the receiver,
   - for each segment and for each symbol of the signal received for this segment, estimating a phase error by means of a phase-locked loop (504) applied to said product,
   - for each segment, determining (505) a reference phase by means of a linear regression applied to the phase errors estimated for all of the segments,

- determining (506), for at least one pair of antennas, a phase difference between the signals transmitted by the antennas of the pair, on the basis of the difference between the reference phases computed for the segments associated with said antennas.

2. The estimating method according to Claim 1, further comprising, conjointly with the determination (506) of the phase difference, determining a carrier frequency offset between the signal transmitted by all of the antennas and the received signal by means of said linear regression (505) applied to the phase errors estimated for all of the segments.

3. The estimating method according to either one of the preceding claims, wherein the successive time segments (S1, S2) are separated by guard intervals (G1, G2, G3) and the method further comprises removing these guard intervals from the received and digitized signal.

4. The estimating method according to any one of the preceding claims, further comprising a step of determining an angular direction of transmission of the signal on the basis of said phase differences.

5. The estimating method according to any one of the preceding claims, further comprising steps of:

- correcting (507) each symbol of the received and digitized signal for the computed phase error by means of the phase-locked loop,
- estimating (508) an impulse response of the propagation channel by means of a computation of an intercorrelation between the sequence of the corrected received symbols and a sequence of the symbols transmitted in the segments.

6. The estimating method according to any one of the preceding claims, comprising beforehand an initial synchronizing phase specific to each segment comprising steps of:

- determining, in a preamble sequence prior to the first segment, a first estimation of a carrier frequency offset between the received and digitized signal and the transmitted signal,
- correcting (801) the digitized received signal using this first estimation,
- estimating (802), for the start of each segment, an impulse response of the propagation channel by means of a computation of an intercorrelation between a sequence of corrected received symbols and a sequence of the corresponding transmitted symbols,
- determining, on the basis of the impulse response estimated for the start of each segment, a symbol corresponding to the start of the segment.

7. The estimating method according to any one of the preceding claims, wherein the sequences of symbols transmitted in the time segments are secured by means of an encryption algorithm.

8. A receiver of a signal modulated into the form of pulses according to ultra-wideband modulation, comprising an antenna and a computer configured to execute the steps of the method for estimating at least one characteristic of the received signal according to any one of the preceding claims.

9. A communication system comprising a transmitter of a signal modulated into the form of pulses according to ultra-wideband modulation comprising a plurality of antennas, the signal being transmitted in succession by a plurality of antennas in successive time segments, each segment being dedicated to one separate antenna, the system further comprising a receiver according to Claim 8.

| G1 | S1 | G2 | S2 | G3 |
|----|----|----|----|----|

FIG.1

C0 :

| P | SFD | PHR | PSDU |
|---|-----|-----|------|

C1 :

| P | SFD | STS | PHR | PSDU |
|---|-----|-----|-----|------|

C2 :

| P | SFD | PHR | PSDU | STS |
|---|-----|-----|------|-----|

C3 :

| P | SFD | STS |
|---|-----|-----|

FIG.2

FIG.3

FIG.4

FIG.4b

FIG.5

FIG.6

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20200252101 A
- US 20170227623 A
- US 9048979 B
- US 9048980 B
- US 2018254870 A1